# EUROPÄISCHE PATENTSCHRIFT

(11) **EP 2 125 454 B1**
(45) Veröffentlichungstag und Bekanntmachung des Hinweises auf die Patenterteilung: **29.12.2010**
(21) Anmeldenummer: 07821951.6
(22) Anmeldetag: 29.10.2007
(51) Int. Cl.: B60S 1/08

(54) **VORRICHTUNG ZUM EINSTELLEN EINER PARKLAGE EINES WISCHERARMS IN EINER WISCHANLAGE**
DEVICE FOR SETTING A RESTING POSITION OF A WIPER ARM IN A WIPER SYSTEM
DISPOSITIF DE REGLAGE D'UNE POSITION FIXE D'UN BRAS D'ESSUIE-GLACE DANS UN SYSTEME D'ESSUIE-GLACE

(30) Priorität: 27.12.2006 DE 102006061631
(43) Veröffentlichungstag der Anmeldung: 02.12.2009
(73) Patentinhaber: Robert Bosch GmbH, 70442 Stuttgart (DE)
(72) Erfinder: ZIMMER, Joachim, 77880 Sasbach (DE)
(86) Internationale Anmeldenummer: PCT/EP2007/061591
(87) Internationale Veröffentlichungsnummer: WO 2008/080651

(56) Entgegenhaltungen:
- EP-A- 1 334 889
- DE-A1- 10 138 621
- DE-A1- 10 307 959
- DE-A1- 19 624 068
- DE-C1- 3 627 561

## Beschreibung

Die Erfindung betrifft eine Vorrichtung zum Einstellen einer Parklage bei einem Wischerarm einer Wischanlage.

Wischerarme einer Scheibenwischanlage an einem Kraftfahrzeug werden, wenn sie nicht in Betrieb sind, in eine Parkstellung verfahren, die beispielsweise einer Umkehrposition beim reversierenden Wischerbetrieb entsprechen kann. Eine solche Parkstellung befindet sich vorzugsweise in einem Haubenspalt zwischen Motorhaube und Windschutzscheibe, so dass das Sichtfeld des Fahrers nicht durch die ruhenden Wischerarme beeinträchtigt wird.

Im Winter kann diese Parkstellung jedoch nachteilig sein. Bei Fahrzeugen, die im Freien geparkt werden, können besonders bei Nacht tiefe Temperaturen und hohe Luftfeuchtigkeit dazu führen, dass die Wischblätter auf der Windschutzscheibe festfrieren. Um dies zu vermeiden, klappen Fahrzeughalter beim Abstellen des Fahrzeugs die Wischerarme ab, so dass die Wischblätter nicht mehr auf der Windschutzscheibe aufliegen. Wenn jedoch die Wischerarme im Haubenspalt versteckt sind, ist dies nicht möglich. Weiterhin kann sich im Haubenspalt eine Schneebarriere bilden, die den Wischerarm in dem Haubenspalt blockiert und somit verhindert, dass die Windschutzscheibe ordnungsgemäß gewischt werden kann.

Auch ist es bei einem Festfrieren des Wischerarms an der Windschutzscheibe schwer möglich, den Wischerarm von der Windschutzscheibe zu lösen, wenn sich dieser in dem Haubenspalt zwischen Windschutzscheibe und Motorhaube befindet.

Bei mechanischen Wischanlagen ist bekannt, den Wischwinkel mechanisch zu verstellen, um eine untere Umkehrlage der Wischerarme anzuheben und so eine so genannte Winterstellung zu realisieren, in der der Wischerarm abgeklappt werden kann. Dies führt jedoch dazu, dass sich nicht nur die Parklage außerhalb des Haubenspalt befindet sondern auch dass der Wischbereich verkleinert wird, wodurch die Sicht des Fahrers begrenzt wird.

Die Druckschrift DE 10307959 A1 offenbart eine Vorrichtung zum Betreiben eines Scheibenwischers, wobei der Scheibenwischer bei Bedarf in eine Winter-/Servicestellung bewegbar ist, in welcher der Scheibenwischer an der Fahrzeugscheibe von seiner im Wesentlichen horizontalen Parkstellung zumindest teilweise in Richtung zu einer vertikalen Stellung bewegt ist. Es ist ein Sensor zur Erfassung des Fahrbetriebs des Kraftfahrzeugs vorgesehen. Die Vorrichtung bewegt den Scheibenwischer nach dem Starten des Kraftfahrzeugs bei Erfassung des Fahrbetriebs des Kraftfahrzeugs automatisch aus der Winter-/Servicestellung in die Parkstellung. Der Scheibenwischer wird in die Winter-/Servicestellung bewegt, falls ein Außentemperatursensor eine Außentemperatur des Kraftfahrzeugs unterhalb eines vorgegebenen Grenzwerts erfasst.

Es ist Aufgabe der vorliegenden Erfindung, ein Wischersystem zur Verfügung zu stellen, bei dem sowohl eine Parklage für einen Wischerarm in einem Haubenspalt vorgesehen ist, als auch ein Festfrieren oder Blockieren des Wischerarms im Winter vermieden werden kann.

Diese Aufgabe wird durch das Wischersystem nach Anspruch 1 gelöst.

Weitere vorteilhafte Ausgestaltungen der Erfindung sind in den abhängigen Ansprüchen angegeben.

Gemäß einem ersten Aspekt ist eine Vorrichtung zum Einstellen einer Parklage einer Wischanlage eines Fahrzeugs vorgesehen. Die Vorrichtung umfasst einen Wischerarm und eine Steuereinheit zum Einstellen einer ersten Parklage, auf die der Wischerarm in einem nicht aktivierten Zustand der Wischanlage eingestellt wird. Die Steuereinheit stellt den Wischerarm im nicht aktivierten Zustand der Wischeranlage abhängig von Prognosen von Umgebungszuständen in eine zweite Parklage ein.

Eine Idee der Erfindung besteht darin, dass bei einem Wischsystem mit einer Steuereinheit die Steuereinheit den Wischerarm abhängig von Prognosen für Umgebungsbedingungen, insbesondere der Witterung, in eine zweite Parkstellung beim Abstellen des Fahrzeugs gebracht wird, die ein einfaches Abklappen des Wischerarms bzw. ein einfaches Lösen des Wischerarms von der Windschutzscheibe, wenn dieser festgefroren ist, ermöglicht. Im Gegensatz zur mechanischen Verstellung des Wischwinkels, die in der Regel unmittelbar am Wischerarm vorgenommen werden muss, ist bei dem erfindungsgemäßen Wischsystem vorgesehen, dass die Einstellung einer zweiten Parklage bei Abstellen des Fahrzeugs automatisch vorgenommen werden kann, ohne dass sich der Benutzer Gedanken über die zu erwartende Witterung, insbesondere über eine bestehende Frostgefahr, machen muss.

Vorzugsweise können die Prognosen von Umgebungszuständen Bedingungen angeben, bei denen ein Wischerarm an der Windschutzscheibe des Fahrzeugs festfriert.

Die Umgebungszustände können durch mindestens einer folgenden Parameter bestimmt sein: eine Umgebungstemperatur, eine Luftfeuchtigkeit, einen Niederschlag, einen Umgebungsluftdruck, eine Region, in der sich das Fahrzeug befindet, eine Jahreszeit und eine Höhe, auf der sich das Fahrzeug befindet.

Weiterhin können die Prognosen von Umgebungszustände durch eine von extern empfangene Prognoseinformation über zu erwartende Wetter-/Temperaturbedingungen und/oder anhand von Ist-Zuständen von Umgebungsbedingungen durch die Steuereinheit bestimmt sein. Erwartete Umgebungszustände können durch mindestens eine folgenden Informationen bestimmt sein: eine Umgebungstemperatur, eine Luftfeuchtigkeit, einen Niederschlag, einen Umgebungsluftdruck, eine Region, in der sich das Fahrzeug befindet, eine Jahreszeit, eine Höhe, eine von extern empfangene Prognoseinformation über zu erwartende Wetter-/Temperaturbedingungen, sowie eine Zeitinformation.

Vorzugsweise kann die Steuereinheit ausgebildet sein, um den Wischerarm bei einem abgestellten Fahrzeug in die Winterparklage einzustellen.

Weiterhin kann die Steuereinheit den Wischerarm bei einem Abstellen des Fahrzeugs in die Winterparklage einstellen, wobei das Abstellen des Fahrzeugs durch mindestens ein beim Abstellen des Fahrzeug detektierbares Ereignis oder detektierbare Zustand über das Bordnetz detektiert wird.

Vorzugsweise kann die Steuereinheit den Wischerarm ansteuern, bei einem Fahrtbeginn des Fahrzeug in die Sommerparklage einzustellen, wobei der Fahrtbeginn des Fahrzeugs durch mindestens ein beim Fahrtbeginn des Fahrzeug detektierbares Ereignis oder detektierbaren Zustand über das Bordnetz detektiert wird.

Weiterhin kann die erste Parklage einer Wischerarmposition in einem Haubenspalt entsprechen, und die zweite Parklage einer Wischerarmposition entsprechen, bei der der Wischerarm von einer Windschutzscheibe des Fahrzeugs wegklappbar ist.

Weiterhin kann ein manuell bedienbarer Schalter vorgesehen sein, um der Steuereinheit das Einnehmen der Winterparklage vorzugeben und/oder um der Steuereinheit das Einnehmen der Sommerparklage vorzugeben.

Gemäß einem weiteren Aspekt ist ein Verfahren zum Einstellen einer Parklage einer Wischanlage eines Fahrzeugs vorgesehen, wobei der Wischerarm auf eine erste Parklage in einem nicht aktivierten Zustand der Wischanlage eingestellt wird. Der Wischerarm wird im nicht aktivierten Zustand der Wischeranlage abhängig von Umgebungszuständen und/oder erwarteten Umgebungszuständen auf eine zweite Parklage eingestellt.

Bevorzugte Ausführungsformen der Erfindung werden nachfolgend anhand der beigefügten Zeichnungen näher erläutert. Es zeigen:
Figur 1a und 1b eine Windschutzscheibe mit einer Wischeranlage in einer Sommerparkstellung bzw. in einer Winterparkstellung;
Figur 2 ein Blockschaltbild zur Realisierung einer Parkstellungssteuerung für ein Wischersystem gemäß einer Ausführungsform der Erfindung.

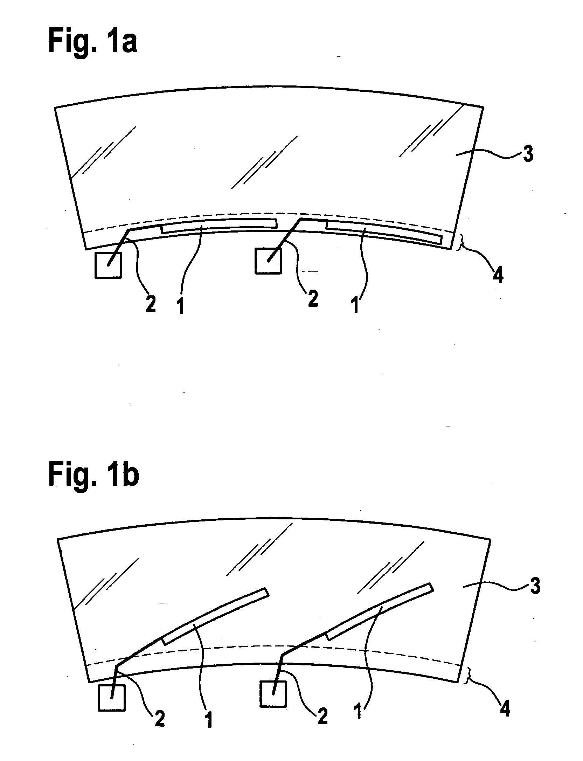

Figur 1a zeigt eine Sommerparkstellung für Wischerarme 2 eines Wischersystems für eine Windschutzscheibe 3 eines Fahrzeugs. Die Wischerarme 2 sind mit den daran angebrachten Wischerblättern 1 in ihrer Parklage in einem Haubenspalt 4 versenkt, d. h. unter eine gedachte Linie (gestrichelt dargestellt) verfahren, die sich aus einer gedachten Verlängerung einer Motorhaube des Fahrzeugs zur Windschutzscheibe 3 ergibt. Die Parklage bezeichnet eine Ruheposition der Wischerarme 2, die beispielsweise beim Abstellen des Fahrzeugs oder auch bei nicht aktiviertem Wischersystem eingenommen wird.

In Figur 1b ist eine weitere Parklage der Wischerarme 2 gezeigt, die im folgenden beispielsweise als Winterparklage bezeichnet wird. Dabei werden die Wischerarme 2 in eine Position gebracht, bei der zumindest die Wischerblätter 1 außerhalb des Haubenspaltes 4, d.h. über der o.a. gedachten Linie, liegen, so dass die Wischerarme 2 abgeklappt werden können und im Fall, dass sie festgefroren sind, einfach von der Windschutzscheibe gelöst werden können. Die Winterparklage ist bezüglich dem unteren Rand der Windschutzscheibe 3 gegenüber der Sommerparklage erhöht.

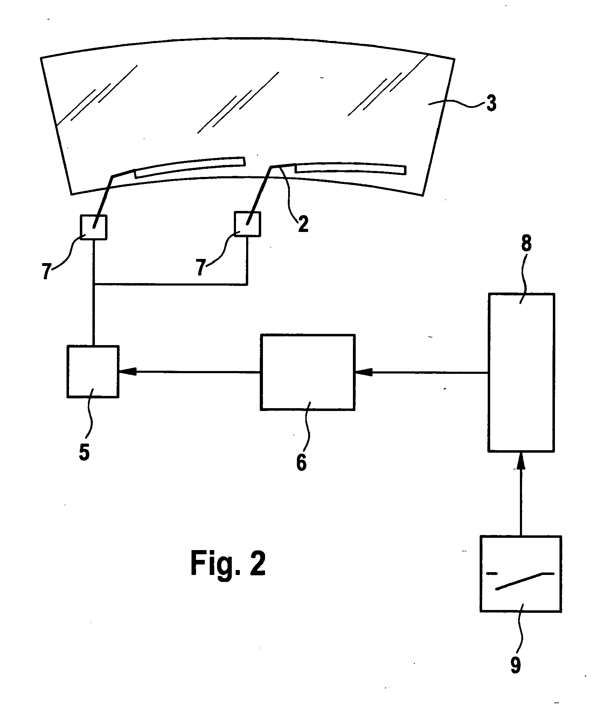

In Figur 2 ist ein Blockschaltbild zur Ansteuerung der Wischerarme 2 dargestellt. Das Steuersystem umfasst eine Steuereinheit 6, die über eine geeignete Treiberschaltung 5, eine Antriebseinheit 7, z. B. einen Reversier-Wischermotor, die zum Antreiben des Wischerarms 2 vorgesehen ist, in geeigneter Weise ansteuert. Die Steuereinheit 6 bestimmt die Parklage, in die die Wischerarme 2 bewegt werden, wenn sich das Wischersystem nicht in einem Wischzustand, d. h. nicht im aktiven Betrieb, befindet.

Beim Abstellen des Fahrzeugs ermittelt die Steuereinheit 6 anhand von bereitgestellten Daten und Fahrzeugzuständen, ob die Wischerarme in der Sommerparklage verbleiben sollen oder in die Winterparklage verfahren werden sollen. Im Normalfall wird die Sommerparklage eingenommen, bei die Wischerarme 2 in den Haubenspalt verfahren werden oder dort verbleiben. Das Abstellen des Fahrzeugs kann anhand verschiedener im Fahrzeug detektierbarer Ereignisse oder Zustände, die üblicherweise beim Abstellen des Fahrzeugs auftreten, detektiert werden, wie z. B. durch das Abstellen des Motors, Anziehen der Handbremse, Abziehen des Zündschlüssels, Öffnen der Fahrertür, Ablegen des Anschnallgurtes usw..

Es können eine Reihe von im Bordnetz 8 des Fahrzeugs verfügbare Informationen für eine Entscheidung, welche Parklage eingenommen werden soll, verwendet werden. Z.B. können für den Betrieb des Fahrzeugs erfasste Informationen, wie z.B. die Außentemperatur, oder von extern erhaltene Informationen, z.B. über die zu erwartende Witterung, für die Bestimmung der Parklage verwendet werden.

Da die Winterparklage das Sichtfeld durch die Windschutzscheibe beeinträchtigt, soll diese nur eingenommen werden, wenn besondere Umfeldbedingungen vorliegen. Im konkreten Ausführungsbeispiel soll die Winterparklage nur eingenommen werden, wenn damit zu rechnen ist, dass die Wischerblätter an der Windschutzscheibe festfrieren. Die Winterparklage ermöglicht es dann festgefrorene Wischerblätter einfacher von der Windschutzscheibe 3 zu lösen, oder durch Aufstellen der Wischerarme eine Festfrieren zu verhindern.

Zum Beispiel wird eine Außentemperatur, die häufig im Bordnetz 8 bereits als Information über den Umgebungszustand vorliegt, an die Steuereinheit 6 übermittelt und dort ausgewertet. Die Winterparklage wird beim Abstellen des Fahrzeugs eingenommen, wenn die Umgebungstemperatur unter einer Schwellentemperatur liegt. Weiterhin können über zusätzliche Sensoren Sensorwerte über die Luftfeuchtigkeit und/oder den Luftdruck weitere Informationen (über das Bordnetz 8) darüber liefern, mit welcher Witterung in Kürze zu rechnen ist, so dass die Steuereinheit 6 anhand der Temperatur, der Luftfeuchtigkeit und des Luftdrucks eine Wetterprognose vornehmen kann und entscheiden kann, die Wischerarme beim Abstellen des Fahrzeugs in die Winterparklage zu bringen.

Beispielsweise kann eine solche Entscheidung getroffen werden, wenn die Temperatur unter einer Schwellentemperatur, die Luftfeuchtigkeit über einer Schwellenluftfeuchtigkeit und der Luftdruck niedrig ist und/oder eine sinkende Tendenz hat. Alternativ oder zusätzlich können Wetter-/Temperaturprognosen in geeigneter Weise z.B. über ein Empfangs-System, z.B. ein Autoradio, empfangen werden und über das Bordnetz 8 der Steuereinheit 6 bereitgestellt werden. Gibt diese Wetter-/Temperaturprognose an, dass mit Frost und aufgrund der Luftfeuchtigkeit mit einem Festfrieren der Wischerblätter oder mit einem Niederschlag zu rechnen ist, kann die Steuereinheit 6 die Wischerarme 2 beim Abstellen des Fahrzeugs in die Winterparklage verfahren. Die Wetter-/Temperaturprognose kann als ein Datensatz mit erwarteten Temperatur und/oder Luftfeuchtigkeitswerten in der Steuereinheit 6 empfangen werden.

Ferner können alternativ oder zusätzlich die Jahreszeit anhand eines in dem Bordnetz 8 bereitgestellten Datums sowie die Region z. B. anhand eines Positionserkennungssystems (GPS-System) und/oder Navigationssystem ermittelt werden und verwendet werden, um aus statistisch ermittelten, für die entsprechende Jahreszeit an der Position des Fahrzeugs zu erwartenden Witterungsbedingungen, die Winterparklage anzufahren. Insbesondere in Übergangszeiten wie Herbst oder Frühjahr kann zusätzlich die Tageszeit berücksichtigt werden, da in den Übergangszeiten vorrangig nachts mit entsprechendem Frost, d.h. Festfrieren der Wischerblätter, zu rechnen ist.

Weiterhin kann vorgesehen sein, dass die Winterparklage durch eine manuelle Betätigung eines Schalters 9, z. B. über einen Lenkstockschalter, ohne Berücksichtigen der Umgebungszustände eingenommen werden. Durch eine weitere Schalterstellung kann über einen solchen Schalter 9 oder über einen zusätzlichen Schalter (nicht gezeigt) die automatische Einstellung der Winterparklage auch deaktiviert werden, wenn der Benutzer des Fahrzeugs dies nicht wünscht, z.B. weil er das Fahrzeug in einer geschützten Umgebung parkt.

Die wesentlichen Funktionalitäten der Steuereinheit 6 liegen darin, anhand von Ist-Zuständen die Umgebungsbedingung, d. h. die Witterung, der das Fahrzeug ausgesetzt ist, zu bestimmen. Optional kann die Steuereinheit 6 anhand der Ist-Zustände der Umgebungsbedingungen auch Prognosen für zu erwartende Witterungen ermitteln oder solche Prognoseinformationen von extern empfangen. Die entsprechende Parklage wird abhängig von den ausgewerteten Informationen eingestellt.

Für die Verarbeitung von zu erwartenden Witterungszuständen kann auch eine Tageszeitinformation herangezogen werden, die als Zeitsignal, der Urzeit oder auch durch ein Lichtsensorsignal erfolgen kann. Zusätzlich zur Auswertung der Umgebungszustände kann die Jahreszeitinformation für eine Plausibilitätsüberprüfung herangezogen werden, so dass nicht bei einer extremen Witterung im Sommer eine Winterparklage eingenommen wird, obwohl zu dieser Jahreszeit nicht mit einem Festfrieren der Wischerblätter zu rechnen ist.

Zu Fahrtbeginn stellt die Steuereinheit 6 die Wischerarme 2 gegebenenfalls in die Sommerparklage zurück, um zu vermeiden, dass beim Bewegen des Fahrzeugs die Wischerarme 2 durch den Fahrtwind in das Wischfeld gezogen werden und um dem Fahrer ein optimales Sichtfeld bereitzustellen. Der Fahrtbeginn kann anhand verschiedener im Fahrzeug detektierbarer Ereignisse oder Zustände, die üblicherweise beim Abstellen des Fahrzeugs auftreten, detektiert werden. So kann der Fahrtbeginn z. B. durch das Einschalten der Zündung, Einstecken des Zündschlüssels, das Lösen der Handbremse, das Entriegeln der Fahrertür, das Belegen des Fahrersitzes (erkennbar durch einen Belegungsdetektor für den Fahrersitz), das Starten des Motors und andere mögliche zum Fahrtbeginn auftretende Fahrzeugzustände detektiert werden. Auch ist es möglich, das Rückstellen in die Sommerparklage von Kombinationen aus oben genannten Ereignissen abhängig zu machen, um den anstehenden Fahrtbeginn zuverlässiger zu detektieren.

Weiterhin kann die Steuereinheit 6 auch ohne aktive Betätigung des Fahrers bzw. im Falle der Nichtbenutzung des Fahrzeugs bei Unterschreitung einer vordefinierten Temperatur die Winterparklage automatisch einstellen. Dies kann also auch im abgestellten Zustand des Fahrzeugs geschehen. Dabei kann vorgesehen sein, dass der Batterieladezustand berücksichtigt wird, da ein Verstellen der Wischerarme Energie benötigt, die den Ladezustand der Batterie verändert. Eine Überprüfung, ob die Winterparklage eingenommen werden soll, kann bei einem abgestellten Fahrzeug regelmäßig erfolgen, wobei, wenn die Wischerarme 2 einmal in die Winterparklage verfahren worden sind, können diese in dieser Stellung verbleiben, bis das Fahrzeug das nächste Mal in Betrieb genommen wird, so dass die Steuereinheit 6 keine weitere Verstellung aus der Winterparklage vornimmt. Dann werden die Wischerarme 2 zu Fahrtbeginn automatisch in die Sommerparklage in den Haubenspalt 4 und somit aus dem Sichtfeld des Fahrers bewegt.

Die Entscheidung, die Winterparklage einzunehmen, kann durch die Steuereinheit 6, die auch die übrigen Funktionen der Wischanlage steuert oder von einer weiteren mit dem Bordnetz 8 verbundenen Steuereinrichtung vorgenommen werden. Die Steuereinrichtung übermittelt dann der Steuereinheit 6 lediglich ein Parklagensignal, anhand dem die Steuereinheit 6 bei einem Abstellen des Fahrzeugs die Winterparklage einstellt oder nicht.

## Patentansprüche

1. Vorrichtung zum Einstellen einer Parklage einer Wischanlage für eine Windschutzscheibe (3) eines Fahrzeugs:
- mit einem Wischerarm (2); und
- mit einer Steuereinheit (6) zum Einstellen einer ersten Parklage, auf die der Wischerarm (2) in einem nicht aktivierten Zustand der Wischanlage eingestellt wird;
**dadurch gekennzeichnet, dass** die Steuereinheit (6) den Wischerarm (2) im nicht aktivierten Zustand der Wischeranlage abhängig von Prognosen für Umgebungsbedingungen in eine zweite Parklage einstellt.

2. Vorrichtung nach Anspruch 1, **dadurch gekennzeichnet, dass** die Prognosen für Umgebungsbedingungen Bedingungen angeben, bei denen ein Wischerarm (2) an der Windschutzscheibe (3) des Fahrzeugs festfriert.

3. Vorrichtung nach Anspruch 1 oder 2, **dadurch gekennzeichnet, dass** die Steuereinheit (6) den Wischerarm (2) im nicht aktivierten Zustand der Wischeranlage abhängig von Umgebungszuständen in die zweite Parklage einstellt, wobei die Umgebungszustände durch mindestens einer folgenden Parameter bestimmt ist: eine Umgebungstemperatur, eine Luftfeuchtigkeit, einen Niederschlag, einen Umgebungsluftdruck, eine Region, in der sich das Fahrzeug befindet, eine Jahreszeit und eine Höhe.

4. Vorrichtung nach einem der Ansprüche 1 bis 3, **dadurch gekennzeichnet, dass** die Prognosen für Umgebungsbedingungen durch eine von extern empfangene Prognoseinformation über zu erwartende Wetter-/Temperaturbedingungen und/oder anhand von Ist-Zuständen von Umgebungsbedingungen durch die Steuereinheit (6) bestimmt sind.

5. Vorrichtung nach einem der Ansprüche 1 bis 4, **dadurch gekennzeichnet, dass** die Steuereinheit (6) den Wischerarm (2) bei einem abgestellten Fahrzeug in die Winterparklage einstellt.

6. Vorrichtung nach einem der Ansprüche 1 bis 5, **dadurch gekennzeichnet, dass** die Steuereinheit (6) den Wischerarm (2) bei einem Abstellen des Fahrzeug in die Winterparklage einstellt, wobei das Abstellen des Fahrzeugs durch mindestens ein beim Abstellen des Fahrzeug detektierbares Ereignis oder Zustand über das Bordnetz (8) detektiert wird.

7. Vorrichtung nach einem der Ansprüche 1 bis 6, **dadurch gekennzeichnet, dass** die Steuereinheit (6) den Wischerarm (2) ansteuert, bei einem Fahrtbeginn des Fahrzeug in die Sommerparklage einzustellen, wobei der Fahrtbeginn des Fahrzeugs durch mindestens ein beim Fahrtbeginn des Fahrzeug detektierbares Ereignis oder Zustand über das Bordnetz (8) detektiert wird.

8. Vorrichtung nach einem der Ansprüche 1 bis 7, **dadurch gekennzeichnet, dass** die erste Parklage einer Wischerarmposition in einem Haubenspalt (4) entspricht, und die zweite Parklage einer Wischerarmposition entspricht, bei der der Wischerarm von einer Windschutzscheibe (3) des Fahrzeugs wegklappbar ist.

9. Vorrichtung nach einem der Ansprüche 1 bis 8, **dadurch gekennzeichnet, dass** ein manuell bedienbarer Schalter (9) vorgesehen ist, um der Steuereinheit (6) das Einnehmen der Winterparklage vorzugeben und/oder um der Steuereinheit (6) das Einnehmen der Sommerparklage vorzugeben.

10. Verfahren zum Einstellen einer Parklage einer Wischanlage eines Fahrzeugs, wobei der Wischerarm auf eine erste Parklage in einem nicht aktivierten Zustand der Wischanlage eingestellt wird;
**dadurch gekennzeichnet, dass** der Wischerarm im nicht aktivierten Zustand der Wischeranlage abhängig von erwarteten Umgebungszuständen, die durch Prognosen für Umgebungsbedingungen bestimmt sind, auf eine zweite Parklage eingestellt wird.

## Claims

1. Device for setting a resting position of a wiper system for a windscreen (3) of a vehicle:
- having a wiper arm (2); and
- having a control unit (6) for setting a first resting position to which the wiper arm (2) is set in a non-activated state of the wiper system;
**characterized in that** the control unit (6) sets the wiper arm (2) to a second resting position in the non-activated state of the wiper system as a function of predictions about ambient conditions.

2. Device according to Claim 1, **characterized in that** the predictions about ambient conditions indicate conditions under which a wiper arm (2) will freeze to the windscreen (3) of the vehicle.

3. Device according to Claim 1 or 2, **characterized in that** the control unit (6) sets the wiper arm (2) to the second resting position in the non-activated state of the wiper system as a function of ambient states, wherein the ambient states are determined by at least one following parameter: an ambient temperature, a humidity value, a precipitation value, an ambient air pressure value, a region in which the vehicle is located, a time of year and an altitude.

4. Device according to one of Claims 1 to 3, **characterized in that** the predictions about ambient conditions are determined by the control unit (6) by means of a prediction information item, received externally, about expected weather conditions/temperature conditions and/or on the basis of actual states of ambient conditions.

5. Device according to one of Claims 1 to 4, **characterized in that** the control unit (6) sets the wiper arm (2) to the winter resting position when the vehicle is parked.

6. Device according to one of Claims 1 to 5, **characterized in that** the control unit (6) sets the wiper arm (2) to the winter resting position when the vehicle is shut down, wherein the shutting down of the vehicle is detected by means of at least one event or state across the vehicle's on-board power system (8) which can be detected when the vehicle is shut down.

7. Device according to one of Claims 1 to 6, **characterized in that** the control unit (6) drives the wiper arm (2) in order to set it to the summer resting position at the start of travel of the vehicle, wherein the start of travel of the vehicle is detected by means of at least one event or state across the vehicle's on-board power system (8) which can be detected at the start of travel of the vehicle.

8. Device according to one of Claims 1 to 7, **characterized in that** the first resting position corresponds to a wiper arm position in a gap (4) in the bonnet, and the second resting position corresponds to a wiper arm position in which the wiper arm can be folded away from a windscreen (3) of the vehicle.

9. Device according to one of Claims 1 to 8, **characterized in that** a switch (9) which can be operated manually is provided in order to preset the assumption of the winter resting position to the control unit (6) and/or to preset the assumption of the summer resting position to the control unit (6).

10. Method for setting a resting position of a wiper system of a vehicle, wherein the wiper arm is set to a first resting position in a non-activated state of the wiper system;
**characterized in that** the wiper arm is set to a second resting position in the non-activated state of the wiper system as a function of expected ambient states which are determined by predictions about ambient conditions.

## Revendications

1. Dispositif destiné à établir une position d'attente pour une installation d'essuie-glace d'un pare-brise (3) d'un véhicule, présentant :
- un bras (2) d'essuie-glace et
- une unité de commande (6) qui établit une première position d'attente dans laquelle le bras (2) d'essuie-glace est placé lorsque l'installation d'essuie-glace est à l'état désactivé,
**caractérisé en ce que** lorsque l'installation d'essuie-glace est à l'état désactivé, l'unité de commande (6) place le bras (2) d'essuie-glace dans une deuxième position d'attente en fonction de prévisions des conditions d'environnement.

2. Dispositif selon la revendication 1, **caractérisé en ce que** les prévisions des conditions d'environnement indiquent des conditions dans lesquelles un bras (2) d'essuie-glace est bloqué par le givre sur le pare-brise (3) du véhicule.

3. Dispositif selon la revendication 1 ou 2, **caractérisé en ce que** lorsque l'installation d'essuie-glace est à l'état désactivé, l'unité de commande (6) place le bras (2) d'essuie-glace dans la deuxième position d'attente en fonction de l'état de l'environnement, l'état de l'environnement étant déterminé par au moins l'un des paramètres que sont la température ambiante, l'humidité de l'air, la présence de précipitations, la pression atmosphérique ambiante, une région dans laquelle le véhicule se trouve, la saison et l'altitude.

4. Dispositif selon l'une des revendications 1 à 3, **caractérisé en ce que** les prévisions des conditions d'environnement sont déterminées par l'unité de commande (6), à partir d'une information de prévision, reçue de l'extérieur, sur les conditions météorologiques ou de température auxquelles on peut s'attendre et/ou à l'aide de l'état effectif des conditions d'environnement.

5. Dispositif selon l'une des revendications 1 à 4, **caractérisé en ce que** l'unité de commande (6) place le bras (2) d'essuie-glace dans une position d'attente d'hiver lorsque le véhicule est stationné.

6. Dispositif selon l'une des revendications 1 à 5, **caractérisé en ce que** l'unité de commande (6) place le bras (2) d'essuie-glace en position d'attente d'hiver lorsque le véhicule est stationné, le stationnement du véhicule étant détecté par au moins un événement ou au moins une situation détectable par le réseau de bord (8) lors du stationnement du véhicule.

7. Dispositif selon l'une des revendications 1 à 6, **caractérisé en ce que** l'unité de commande (6) active le bras (2) d'essuie-glace pour le placer en position d'attente d'été au démarrage du véhicule, le démarrage du véhicule étant détecté par au moins un événement ou au moins une situation détectable par le réseau de bord (8).

8. Dispositif selon l'une des revendications 1 à 7, **caractérisé en ce que** la première position d'attente correspond à une position du bras d'essuie-glace dans un interstice (4) du capot et la deuxième position d'attente correspond à une position du bras d'essuie-glace dans laquelle le bras d'essuie-glace peut être éloigné du pare-brise (3) du véhicule par basculement.

9. Dispositif selon l'une des revendications 1 à 8, **caractérisé en ce qu'**il présente un commutateur (9) actionné manuellement qui impose à l'unité de commande (6) de prendre la position d'attente d'hiver et/ou qui impose à l'unité de commande (6) de prendre la position d'attente d'été.

10. Procédé pour placer une installation d'essuie-glace d'un véhicule dans une position d'attente, le bras d'essuie-glace étant placé dans une première position d'attente lorsque l'installation d'essuie-glace est à l'état désactivé,
**caractérisé en ce que** lorsque l'installation d'essuie-glace est à l'état désactivé, le bras d'essuie-glace est placé dans une deuxième position d'attente en fonction d'états attendus de l'environnement, déterminés par des prévisions des conditions d'environnement.
